# EUROPEAN PATENT APPLICATION

(11) **EP 4 322 134 A1**
(43) Date of publication of application: **14.02.2024**
(21) Application number: 23187415.7
(22) Date of filing: 25.07.2023
(51) Int. Cl.: G08G 5/00, G08G 5/04

(54) **METHOD AND APPARATUS FOR PROVIDING FLIGHT VEHICLE OPERATION INFORMATION**

(30) Priority: 29.07.2022 KR 20220094887
(71) Applicant: Pablo Air Co., Ltd., Incheon (KR)
(72) Inventor: Kim, Hyeong Min, INCHEON (KR); Lim, Seung Han, DAEJEON (KR); Kim, Youngjoon, INCHEON (KR); Lee, Seung Yeop, INCHEON (KR); Lee, Hyun Woo, INCHEON (KR)
(74) Representative: Glawe, Delfs, Moll

(57) **Abstract**

A method of providing flight vehicle operation information is provided. The method may comprise providing a first control screen, which displays first operation information of a plurality of monitored flight vehicles, inputting the first operation information and context information to a pre-established operation information prediction model and generating second operation information of the monitored flight vehicles at a future time point based on data output from the operation information prediction model, and providing a second control screen, which displays the second operation information.

## Description

### BACKGROUND

### 1. Technical Field

The present disclosure relates to a method and apparatus for providing flight vehicle operation information, and more particularly, to a method and apparatus for providing a control screen with flight vehicle operation information displayed thereon.

### 2. Description of the Related Art

A control screen is presented, displaying operation information of multiple monitored flight vehicles. Controllers utilize this control screen to assess the operational states of the monitored flight vehicles and take appropriate actions to control their operations based on prevailing circumstances.

For example, controllers employ information gathered from sensors installed in each monitored flight vehicle to anticipate and notify the pilots, via communication, about potential collision risks between the monitored flight vehicles to avert collisions among the monitored flight vehicles.

However, if the sensors malfunction or if there is inadequate communication between the controllers and the pilots of the monitored flight vehicles, it becomes challenging to accurately predict and caution against collision risks, thereby impeding effective collision prevention measures between the monitored flight vehicles.

### SUMMARY

Aspects of the present disclosure provide a method and apparatus for providing flight vehicle operation information, which provide a plurality of control screens where operation information of a plurality of monitored flight vehicles is displayed and can thereby allow a user to easily identify various information regarding the monitored flight vehicles.

Aspects of the present disclosure also provide a method and apparatus for providing flight vehicle operation information, which can accurately predict the risk of collisions between the monitored flight vehicles using a plurality of control screens and an operation information prediction model trained with artificial intelligence (AI) technology.

Aspects of the present disclosure also provide a method and apparatus for providing flight vehicle operation information, which can rapidly and efficiently inform a controller of any detected collisions between the monitored flight vehicles through a control screen.

Aspects of the present disclosure also provide a method and apparatus for providing flight vehicle operation information, which can prevent collisions between the monitored flight vehicles by providing a control screen displaying selectable collision avoidance alternatives.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the inventive concept, there is a method of providing flight vehicle operation information, performed by a computing device. The method may comprise providing a first control screen, which displays first operation information of a plurality of monitored flight vehicles, inputting the first operation information and context information to a pre-established operation information prediction model and generating second operation information of the monitored flight vehicles at a future time point based on data output from the operation information prediction model, and providing a second control screen, which displays the second operation information.

In some embodiments, providing the first control screen may comprise displaying the first operation information near user interfaces (UI) that represent the respective monitored flight vehicles, displaying a list of the monitored flight vehicles in a first area of the first control screen, displaying notification messages associated with operations of the monitored flight vehicles in a second area of the first control screen, and displaying a map of a region being controlled via the first control screen in a third area of the first control screen.

In some embodiments, providing the second control screen may comprise presenting a simulated image with a playback time that corresponds to a predefined first time on the second control screen, and the simulated image may be regenerated at intervals of a predefined second time.

In some embodiments, providing the second control screen may comprise predicting a potential collision between first and second monitored flight vehicles, which are among the monitored flight vehicles, based on the second operation information, displaying information on the potential collision if the potential collision is predicted, and presenting details on how to control the first and second monitored flight vehicles to avoid the predicted collision on the first control screen.

In some embodiments, predicting the potential collision between the first and second monitored flight vehicles may comprise predicting that a collision between the first and second monitored flight vehicles will occur when a first safety range, set around the first monitored flight vehicle, overlaps with a second safety range, set around the second monitored flight vehicle.

In some embodiments, displaying the information on the potential collision between the first and second monitored flight vehicles may comprise displaying the first and second monitored flight vehicles in the list of the monitored flight vehicles in the first area of the first control screen to be visually distinguishable from other monitored flight vehicles.

In some embodiments, displaying the information on the potential collision between the first and second monitored flight vehicles may comprise displaying a warning message for the potential collision between first and second monitored flight vehicles in the second area of the first control screen.

In some embodiments, displaying the information on the potential collision between the first and second monitored flight vehicles may comprise displaying location information of the potential collision between first and second monitored flight vehicles in the third area of the first control screen.

In some embodiments, displaying the information on the potential collision between the first and second monitored flight vehicles may comprise displaying an image of a simulated collision between the first and second monitored flight vehicles on the first control screen.

In some embodiments, presenting the details on how to control the first and second monitored flight vehicles may comprise displaying safety ranges around the first and second monitored flight vehicles and displaying guidelines for avoiding the potential collision between the first and second monitored flight vehicles.

In some embodiments, the details on how to control the first and second monitored flight vehicles may be a method of controlling the first monitored flight vehicle to avoid the potential collision between the first and second monitored flight vehicles.

In some embodiments, the details on how to control the first and second monitored flight vehicles may be a method of controlling the second monitored flight vehicle to avoid the potential collision between the first and second monitored flight vehicles.

According to yet another aspect of the inventive concept, there is a provided computer system for providing flight vehicle operation information. The system may comprise at least one processor and at least one memory configured to store instructions, wherein the instructions, when executed by at least one processor, causes the at least one processor to perform providing a first control screen, which displays first operation information of a plurality of monitored flight vehicles, inputting the first operation information and context information to a pre-established operation information prediction model and generating second operation information of the monitored flight vehicles at a future time point based on data output from the operation information prediction model, and providing a second control screen, which displays the second operation information.

In some embodiments, the operation of providing the second control screen may comprise predicting a potential collision between first and second monitored flight vehicles, which are among the monitored flight vehicles, based on the second operation information, displaying information on the potential collision if the potential collision is predicted, and presenting details on how to control the first and second monitored flight vehicles to avoid the predicted collision on the first control screen.

In some embodiments, predicting the potential collision between the first and second monitored flight vehicles may comprise predicting that a collision between the first and second monitored flight vehicles occurs when a first safety range, set around the first monitored flight vehicle, overlaps with a second safety range, set around the second monitored flight vehicle.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a flowchart illustrating a method of providing flight vehicle operation information according to an embodiment of the present disclosure;
FIG. 2 illustrates a plurality of control screens displaying flight vehicle operation information, which can be referenced in some embodiments of the present disclosure;
FIG. 3 illustrates a plurality of control screens displaying flight vehicle operation information and an operation information prediction model, which can be referenced in some embodiments of the present disclosure;
FIG. 4 is a detailed flowchart illustrating "S100" of FIG. 1;
FIG. 5 illustrates some of the steps depicted in FIG. 4;
FIG. 6 is a detailed flowchart illustrating "S300" of FIG. 1;
FIG. 7 illustrates the safety range of a flight vehicle, which can be referenced in some embodiments of the present disclosure;
FIG. 8 is a detailed flowchart illustrating "S320" of FIG. 6;
FIGS. 9 through 12 illustrate some of the processes depicted in FIG. 8;
FIG. 13 illustrates a method of displaying context information of a potential collision between flight vehicles, which can be referenced in some embodiments of the present disclosure;
FIG. 14 is a detailed flowchart illustrating "S330" of FIG. 6;
FIG. 15 illustrates some of the sub-steps depicted in FIG. 14; and
FIG. 16 is a hardware configuration view of a system for providing flight vehicle operation information in accordance with some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will be defined by the appended claims and their equivalents.

In describing the present disclosure, when it is determined that the detailed description of the related well-known configuration or function may obscure the gist of the present disclosure, the detailed description thereof will be omitted.

In addition, in describing the component of this disclosure, terms, such as first, second, A, B, (a), (b), can be used. These terms are only for distinguishing the components from other components, and the nature or order of the components is not limited by the terms.

Hereinafter, embodiments of the present disclosure are described with reference to the accompanying drawings.

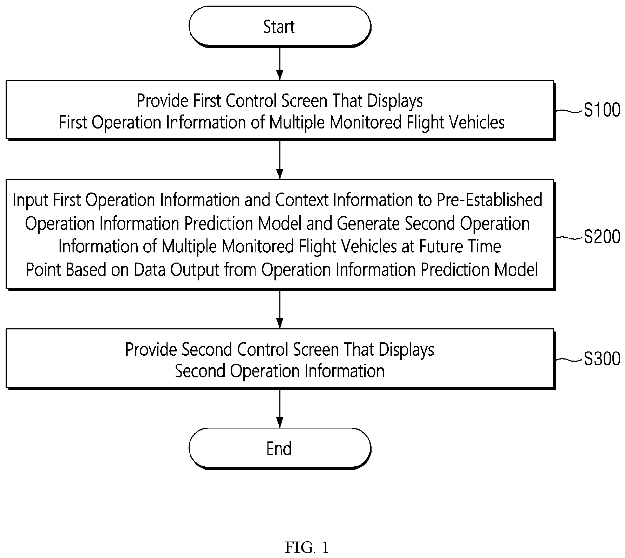

FIG. 1 is a flowchart illustrating a method of providing flight vehicle operation information according to an embodiment of the present disclosure. It is noted that the method depicted in FIG. 1 serves as an illustrative example, and it is possible to include additional steps in or remove certain steps from the method of FIG. 1.

Referring to FIG. 1, in S100, a first control screen that displays first operation information of a plurality of monitored flight vehicles may be provided. The first operation information may include route information from the departures to the destinations of the monitored flight vehicles, real-time speed information of the monitored flight vehicles, and real-time surrounding geographical information of the locations of the monitored flight vehicles are currently situated.

In S200, the first operation information and context information may be input to a pre-established operation information prediction model, and second operation information of the monitored flight vehicles at a future time point may be generated based on data output from the operation information prediction model. The context information, which is information of the surroundings of each of the monitored flight vehicles, may include meteorological data such as wind direction, wind speed, temperature, and humidity.

That is, the operation information prediction model may receive the input of the first operation information and the context information and may output predictive result data for the future state from a current time point, represented by the first operation time, as a response to the input. The information prediction model may be trained using deep learning techniques, leveraging existing flight data. Specifically, the operation information prediction model utilizes a Recurrent Neural Network (RNN) and can be trained by adjusting the ratio between actual data (or training data) and predicted data (or test data) to achieve an accuracy of approximately 95% or higher. However, the present disclosure is not limited to this.

In S300, a second control screen that displays the second operation information may be provided. The second operation information may include operation information of the monitored flight vehicles at a future time point, which is a predetermined time after the current time point. That is, the second operation information may include predicted route information from the departures to the destinations of the monitored flight vehicles, speed information of the monitored flight vehicles at the future time point, and surrounding geographical information of the locations of the monitored flight vehicles at the future time point.

The predetermined time may be defined in advance by input from a user. For example, the predetermined time may be defined as dozens of seconds to several minutes. The longer the predetermined time, the more time can be secured to avoid potential collisions between the monitored flight vehicles at the future time point. That is, the predetermined time may be set to various values depending on the user's objectives.

S300 may include providing a simulated image with a playback time corresponding to a predefined first time on the second control screen, using the second operation information. The simulated image may be regenerated at intervals of a predefined second time, and the predefined first and second times may be set to various values by the user in advance.

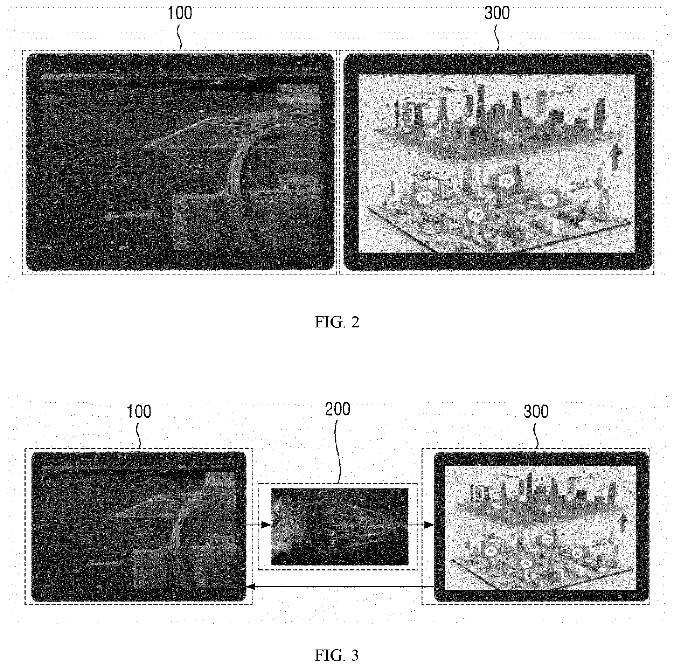

The first and second control screens, which provide operation information of the monitored flight vehicles, will hereinafter be described with reference to FIGS. 2 through 15.

FIG. 2 illustrates a plurality of control screens displaying flight vehicle operation information, which can be referenced in some embodiments of the present disclosure.

Referring to FIG. 2, first and second control screens 100 and 200, which display first operation information and second operation information, respectively, of a plurality of flight vehicles to be monitored, may both be provided. The user may recognize the operating states of the monitored flight vehicles by referring to operation information presented on a single control screen and control the monitored flight vehicles individually as per the situation. This method, however, has limitations as the number of monitored flight vehicles increases.

On the contrary, as the first and second control screens 100 and 200, which display operation information of the monitored flight vehicles at a current time point and operation information of the monitored flight vehicles at a future time point, respectively, are provided together to the user, the user can easily identify the operating states of the monitored flight vehicles. Furthermore, with the second control screen 200 displaying operation information of the monitored flight vehicles at a near future time point, the user can easily identify and avoid potential collisions between the monitored flight vehicles in advance.

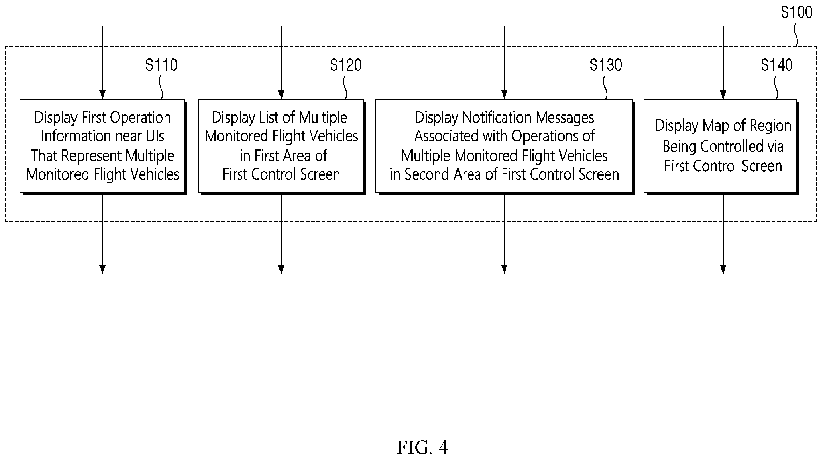

Processes that may be conducted between the first and second control screens 100 and 200 will hereinafter be described with reference to FIG. 3, and a method of predicting and warn against potential collisions between multiple monitored flight vehicles, using the first and second control screens 100 and 200, will hereinafter be described with reference to FIGS. 4 through 15.

FIG. 3 illustrates a plurality of control screens displaying flight vehicle operation information and an operation information prediction model, which can be referenced in some embodiments of the present disclosure.

Referring to FIG. 3, a first computing device (not illustrated) outputting the first control screen 100 may transmit first operation information and context information of a plurality of monitored flight vehicles to an operation information prediction model, but the present disclosure is not limited thereto. Alternatively, the first operation information may be transmitted from the first computing device to the operation information prediction model, and the context information may be transmitted from a second computing device (not illustrated), which is different from the first computing device, to the operation information prediction model.

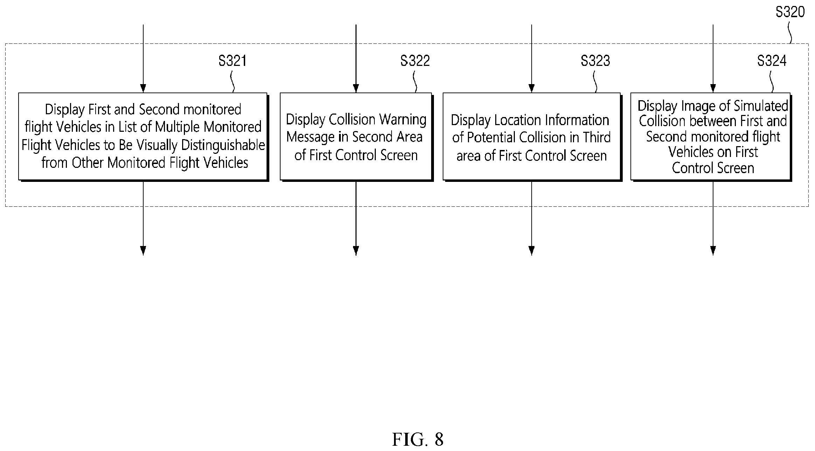

It is determined whether there are potential collisions between the monitored flight vehicles based on the second operation information displayed on the second control screen 200. If potential collisions between the monitored flight vehicles are detected, the first computing device, which outputs the first control screen 100, may transmit the collision information to the first control screen 100, and the first control screen 100, displaying the collision information, may then be provided to the user. This will be described later in further detail with reference to FIGS. 8 through 13. The second control screen 200 may be provided to the user by a third computing device (not illustrated), which is different from the first computing device, but for convenience, the first and second control screens 100 and 200 will hereinafter be described as being output by the first computing device.

In summary, a conventional method of predicting and issuing warnings for potential collisions between multiple monitored flight vehicles, based solely on operation information for a current time point, faces spatial limitations when attempting to efficiently display various related information, such as operation information, potential collision information, and collision warning messages, on a single control screen. However, by providing the user with both the first control screen, which displays the operation information of the multiple monitored flight vehicles at the current time point, and the second control screen, which displays operation information of the multiple monitored flight vehicles at a future time point, it becomes possible to efficiently present various flight operation information.

FIG. 4 is a flowchart illustrating "S 1 00" of FIG. 1. It is noted that S 100 depicted in FIG. 4 serves as an illustrative example, and it is possible to include additional steps in or remove certain steps from S 100 of FIG. 4.

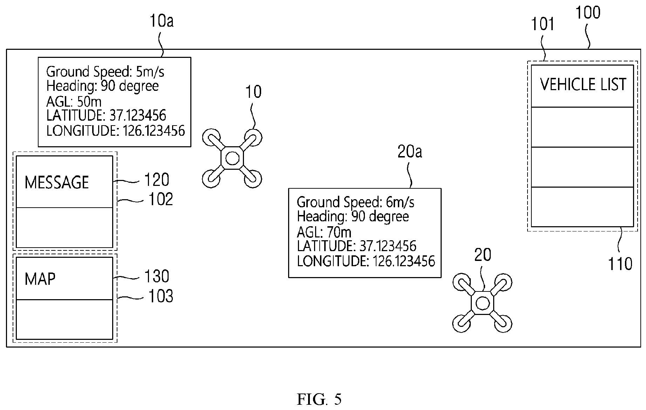

Referring to FIG. 4, S100, which is the step of providing the first control screen displaying the first operation information of the monitored flight vehicles, may include the following sub-steps: S110, which involves displaying the first operation information near user interfaces (UIs) that represent the respective monitored flight vehicles; S120, which involves displaying a list of the monitored flight vehicles in a first area on the first control screen; S130, which involves displaying a notification message associated with the operations of the monitored flight vehicles in a second area on the first control screen; and S 140, which involves displaying a map of a region being controlled via the first control screen, in a third area on the first control screen. S110, S 120, S130, and S140 will hereinafter be described with reference to FIG. 5.

FIG. 5 illustrates some of the steps depicted in FIG. 4. Specifically, FIG. 5 illustrates a method of displaying information related to the operations of multiple monitored flight vehicles in divided areas on a first control screen, which can be referenced in some embodiments of the present disclosure.

Referring to the first control screen 100 of FIG. 5, first operation information 10a of a first monitored flight vehicle may be displayed near a UI 10 representing the first monitored flight vehicle, and first operation information 20a of a second monitored flight vehicle may be displayed near a UI 20 representing the second monitored flight vehicle. The first operation information 10a of the first monitored flight vehicle and the first operation information 20a of the second monitored flight vehicle may include the ground speeds, headings, above ground levels (AGLs), and latitudes and longitudes of the first and second monitored flight vehicles.

A flight vehicle list 110 including the first and second monitored flight vehicles may be displayed in a first area 101 on the right side of the first control screen 100, a notification message window 120 for notification messages associated with the operations of the first and second monitored flight vehicles may be displayed in a second area 102 on the left side of the first control screen 100, and a map of the region where the first and second monitored flight vehicles are located may be displayed in a third area 103 below the notification message window 120. The region where the first and second monitored flight vehicles are located may refer to the region being controlled by the user via the first control screen 100.

As a first control screen presenting operation information of multiple monitored flight vehicles at a current time point and a second control screen presenting operation information of the multiple monitored flight vehicles at a future time point are both provided to the user, the user can easily identify various related operation information.

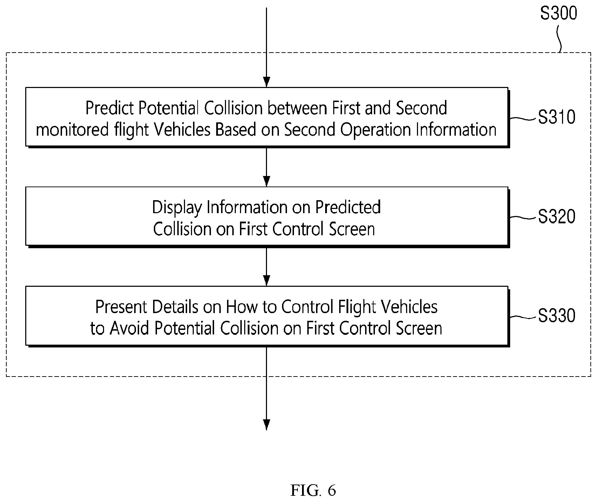

It will hereinafter be described how to predict and issue warnings for potential collisions among multiple flight vehicles based on operation information of the multiple flight vehicles with reference to FIGS. 6 through 13. The embodiment of FIGS. 6 through 13 may be performed by a first computing device (not illustrated) that outputs first and second control screens. Here, the first and second control screens may be the first and second control screens 100 and 200, respectively, of FIGS. 1 through 5. The technical concept of the embodiment of FIGS. 1 through 5 may be directly applicable to the embodiment of FIGS. 6 through 13.

FIG. 6 is a detailed flowchart illustrating "S300" of FIG. 1. Specifically, FIG. 6 illustrates the processes to be performed when potential collisions between multiple monitored flight vehicles are detected based on the information displayed on the second control screen 200.

Referring to FIG. 6, S300, which is the step of presenting the second control screen that displays the second operation information generated in S200, may include the following sub-steps: S310, which involves predicting a potential collision between first and second monitored flight vehicles based on the second operation information; S320, which involves displaying information about the potential collision on the first control screen; and S330, which involves displaying details on how to control the first and second monitored flight vehicles to avoid the potential collision on the first control screen. It is noted that S300 of FIG. 6 serves as an illustrative example, and it is possible to include additional steps in or remove certain steps from S300 of FIG. 6.

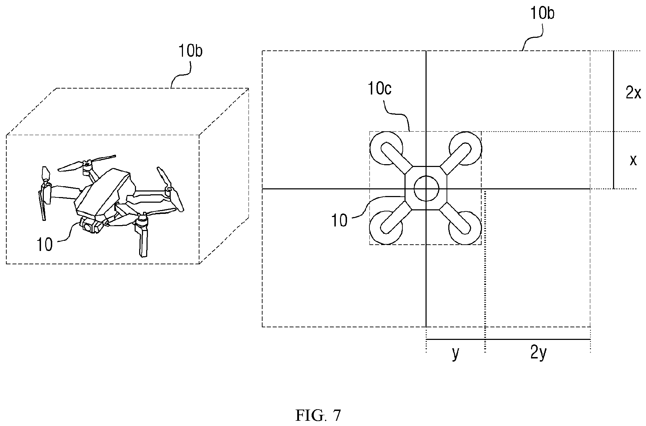

A criterion for predicting a potential collision between the first and second monitored flight vehicles based on the second operation information will hereinafter be described with reference to FIG. 7. FIG. 7 illustrates the safety range of a flight vehicle, which can be referenced in some embodiments of the present disclosure.

Referring to FIG. 7, a safety range 10b may be displayed near a UI 10 representing a flight vehicle. Specifically, the safety range 10b may be set to be twice the distances from the center to outer boundaries 10c of the flight vehicle in X-, Y-, and Z-axes, but the size of the safety range 10b is not particularly limited, but may be set according to the user's choice.

A potential collision between the first and second monitored flight vehicles may be predicted using the safety range of FIG. 7. If there exists an overlap between the safety range 10b of the first monitored flight vehicle and a safety range (not illustrated) of the second monitored flight vehicle, it may be predicted that a collision may occur between the first and second monitored flight vehicles.

A method of displaying information about a potential collision between the first and second monitored flight vehicles on the first control screen will hereinafter be described with reference to FIG. 8.

FIG. 8 is a detailed flowchart illustrating "S320" of FIG. 6. Specifically, FIG. 8 illustrates the processes to be performed on the first control screen when a potential collision between the first and second monitored flight vehicles is detected.

Referring to FIG. 8, S320, which is the step of displaying collision information on the first control screen when it is predicted that a collision may occur between the first and second monitored flight vehicles, may include the following sub-steps: S321, which involves displaying the first and second monitored flight vehicles in the first area of the first control screen in a visually distinguishable manner in the list of monitored flight vehicles; S322, which involves displaying a collision warning message in the second area of the first control screen; S323, which involves displaying information about the potential location of the collision between the first and second monitored flight vehicles in the third area of the first control screen; and S324, which involves displaying an image depicting the collision between the first and second monitored flight vehicles on the first control screen.

In S321, the status windows of the first and second monitored flight vehicles are displayed with a red border or flash in red for a particular amount of time in the list of monitored flight vehicles, among other methods, to be visually distinguished from the other listed monitored flight vehicles.

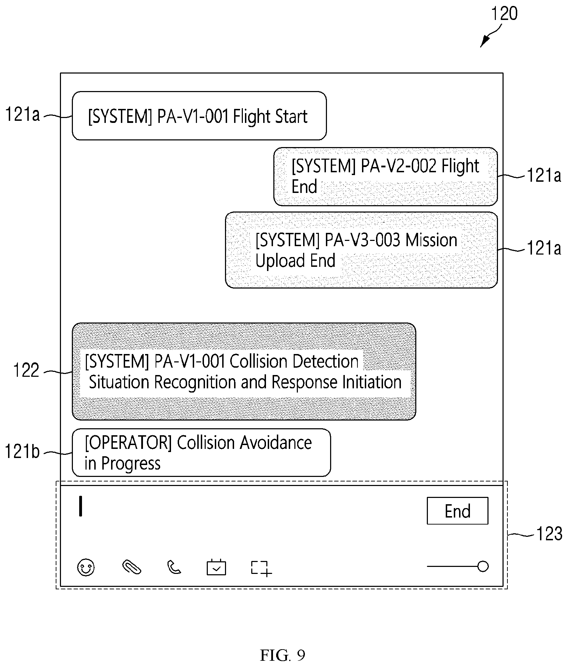

S322 through S324 will hereinafter be described with reference to FIGS. 9 through 12.

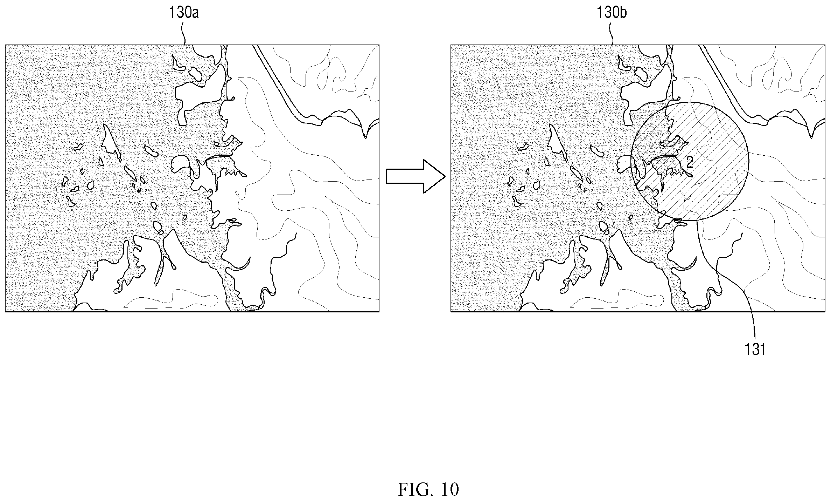

FIGS. 9 through 12 illustrate some of the processes depicted in FIG. 8. FIGS. 9 and 10 illustrate the second and third areas 102 and 103 of the first control screen 100, and the description that follows can be clearly understood with further reference to FIG. 5.

First, a method of displaying collision information in the notification message window 120, which is displayed in the second region 102 of the first control screen 100, will hereinafter be described with reference to FIG. 9.

Referring to FIG. 9, the user may directly input a message through an input section 123 of the notification message window 120 to send the message to a flight vehicle control system through an input unit 123 of the notification message window 120, and the flight vehicle control system may automatically generate notification messages for events such as the occurrence of a hazardous situation, the initiation of a specific mission during flight, and the start and end of a flight and may send the notification messages to the user. The notification messages may be classified into messages 121a that are automatically generated by the flight vehicle control system and messages 121b that are directly written by the user.

If a potential collision between multiple monitored flight vehicles is detected, a warning message 122 including collision information may be displayed in the notification message window 120. The warning message 122 may be a message that is automatically generated by the flight vehicle control system and may be displayed in a visually distinguishable manner from the other notification messages, i.e., the messages 121a and the messages 121b. For example, the warning message 122 may be displayed to have a red border or flash in red for a predetermined amount of time and may thus be visually distinguishable from ordinary notification messages.

A method of displaying collision information on a map 130 of the region being controlled, displayed in the third area 103 of the first control screen 100, will hereinafter be described with reference to FIG. 10.

Referring to FIG. 10, a map 130a of the region being controlled, before the detection of a potential collision between the first and second monitored flight vehicles, may be displayed in the third area 103 of the first control screen 100. Then, after the detection of the potential collision, a map 130b of the region being controlled may be displayed in the third area 103 of the first control screen 100.

In the map 130b, the location of the detection of the potential collision may be displayed in a visually distinguishable manner, and the number of flight vehicles involved in the potential collision may also be displayed. However, the present disclosure is not limited to this, and the method of displaying collision information in the third area 103 of the first control screen 100 is not particularly limited.

The user may face difficulty in easily identify potential collisions between multiple monitored flight vehicles across multiple screens. Thus, the flight vehicle control system may promptly issue warnings for potential collisions by employing various methods, including sending vibrations or notifications to the user's smart device (such as a smartwatch or a mobile phone). Here, the user may be a controller or a pilot.

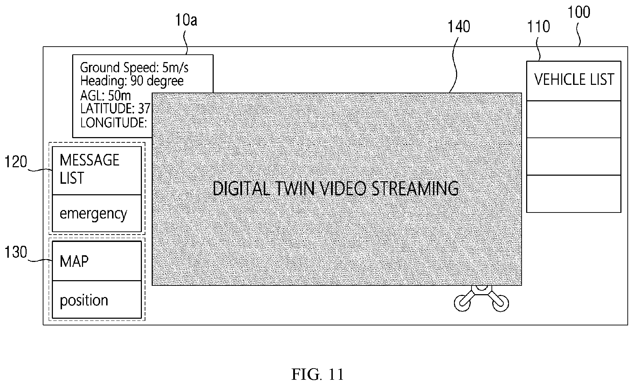

A method of displaying collision information at the center of the first control screen 100 will hereinafter be described with reference to FIG. 11.

Referring to FIG. 11, an image 140 of a simulated collision between the first and second monitored flight vehicles, generated based on information presented on the second control screen 200, may be displayed at the center of the first control screen 100. The simulated collision image 140 may be generated using the second control screen 200 of FIG. 5.

Specifically, when a potential collision between the first and second monitored flight vehicles, which are among the monitored flight vehicles, is detected, a simulated collision image 140 with a playback time corresponding to a third time set in advance for the detected potential collision may be presented on the second control screen 200 and may also be presented in the middle of the first control screen 100. Here, the third time may be set to various values by the user. The location of the simulated collision image 140 on the first control screen 100 is not particularly limited, but may vary.

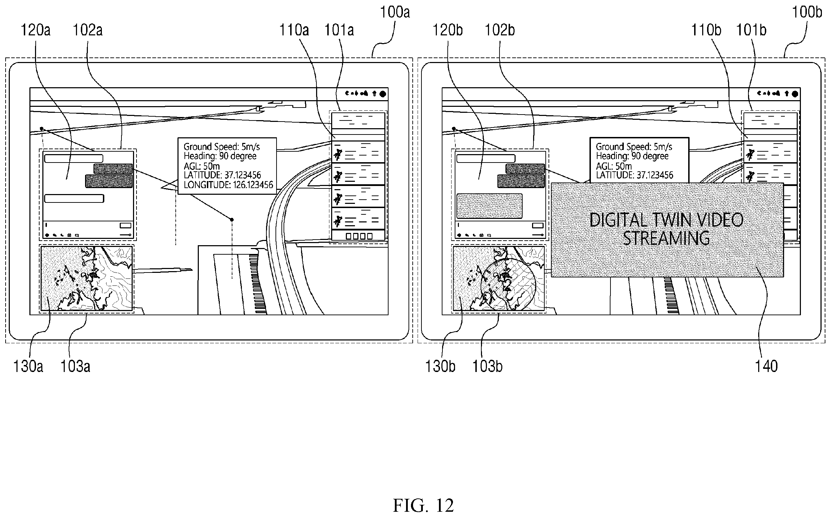

FIG. 12 illustrates a variation in the first control screen 100 before and after the detection of a potential collision between the first and second monitored flight vehicles.

Referring to the left side of FIG. 12, first operation information 10a may be displayed on a first control screen 100a before the detection of a potential collision between the first and second monitored flight vehicles, which are among the monitored flight vehicles, near a UI 10 representing the first monitored flight vehicle. The first operation information 10a may include the ground speed, heading, AGL, latitude, and longitude of the first monitored flight vehicle.

A list 110a of the monitored flight vehicles including the first monitored flight vehicle may be displayed in a first area 101a, which is on the right side of the first control screen 100a, a notification message window 120a associated with the operation of the first monitored flight vehicle may be displayed in a second region 102a, which is on the left side of the first control screen 100a, and a map of the region where the first monitored flight vehicle is located may be displayed in a third region 103a, which is below the notification message window 120a. The region where the first monitored flight vehicle is located may refer to the region being controlled via the first control screen 100a by the user.

Referring to the right side of FIG. 12, a list 110b of the monitored flight vehicles, in which the first and second monitored flight vehicles are visually distinguished from the rest of the monitored flight vehicles, may be displayed in a first area 101b of a first control screen 100b, and a warning message 122b including collision information may be displayed in a notification message window 120b in a second area 102b of the first control screen 100b.

A map 130b of the region being controlled, associated with the potential collision between the first and second monitored flight vehicles, may be displayed in a third region 103b, which is below the notification message window 120b, and an image 140 of a simulated collision between the first and second monitored flight vehicles may be displayed at the center of the first control screen 100b.

In short, when a potential collision between the first and second monitored flight vehicles is predicted or detected, the status windows of the first and second monitored flight vehicles may be displayed with a red border in the first area of the first control screen, a warning message indicating the potential collision may be displayed in the second area of the first control screen, a map of the potential location of the collision between the first and second monitored flight vehicles may be displayed in the third area of the first control screen, and an image of a simulated collision between the first and second monitored flight vehicles, currently being played on the second control screen, may be displayed in the middle of the first control screen.

Accordingly, by presenting information on potential collisions between multiple monitored flight vehicles in various manners on the first control screen, the user can be promptly and efficiently alerted to the risk of collisions.

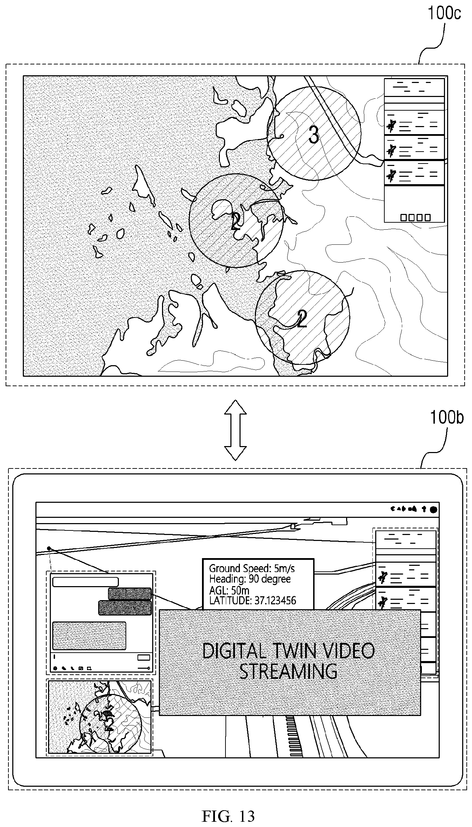

The scenario assuming that a collision between multiple monitored flight vehicles would occur at a specific location has been described so far. However, it is also possible to predict that collisions between multiple monitored flight vehicles may occur simultaneously in various locations, depending on the situation. A method that allows the user to easily perceive information on collision situations predicted to occur simultaneously in various locations and prevent accidents in advance through simple screen operations will hereinafter be described with reference to FIG. 13.

FIG. 13 illustrates a method of displaying context information of a potential collision between flight vehicles, which can be referenced in some embodiments of the present disclosure. A first control screen 100b provided before the prediction of collisions between multiple monitored flight vehicles is shown on the bottom side of FIG. 13. The first control screen 100a is the same as its counterpart of FIG. 12, and thus, a detailed description thereof will be omitted.

If collisions between multiple monitored flight vehicles are predicted to occur simultaneously in various locations, the user may be presented with a notification message indicating the predicted collisions in multiple locations. Subsequently, the user may zoom in by touch or use predefined inputs, such as mouse scrolling, to zoom out and access a first control screen 100c that displays information on the predicted collisions in multiple locations.

For example, referring to FIG. 13, when it is predicted that collisions between flight vehicles will occur in a total of three locations in the near future, a first control screen 100c may be displayed, indicating that two of the three locations involve two flight vehicles, while the remaining location involves three flight vehicles.

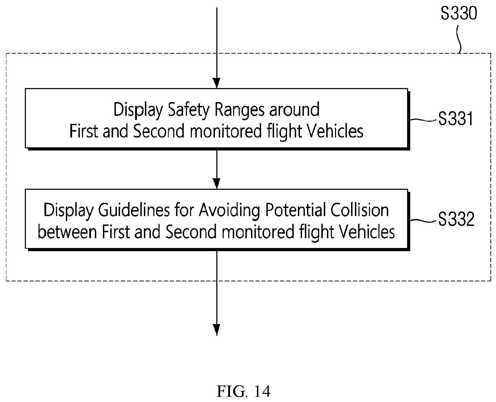

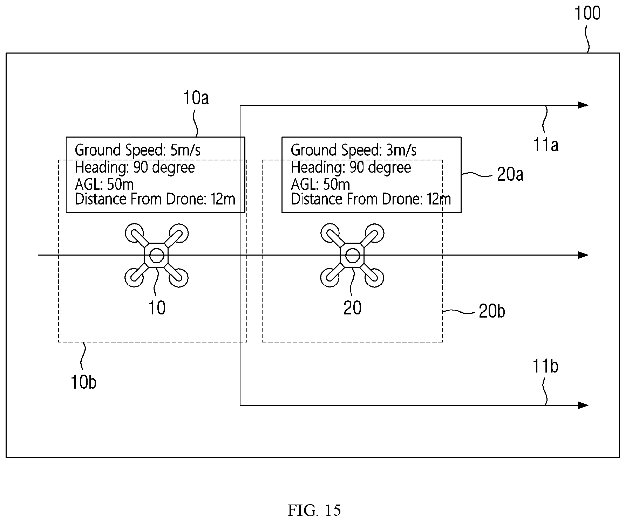

A method of avoiding collisions using operation information of a plurality of flight vehicles according to an embodiment of the present disclosure will hereinafter be described with reference to FIGS. 14 and 15. The method of FIGS. 14 and 15 may be performed by a computing device (not illustrated) that outputs first and second control screens. The first control screen may be the first control screen 100, 100a, 100b, or 100c, and the second control screen may be the second control screen 200, 200a, or 200b. The technical concept of the embodiment of FIGS. 1 through 13 may be directly applicable to the embodiment of FIGS. 14 and 15.

FIG. 14 is a detailed flowchart illustrating "S330" of FIG. 6. Specifically, FIG. 14 illustrates a method of providing a first control screen with guidelines for avoiding a detected potential collision between multiple flight vehicles, and it is noted that additional steps may be included in or certain steps may be removed from S330 of FIG. 14.

Referring to FIG. 14, S330, which is the step of providing the first control screen that displays details on how to control the first and second monitored flight vehicles to avoid the potential collision, may include the following sub-steps: S331, which involves displaying the safety range of the first monitored flight vehicle near the UI representing the first monitored flight vehicle and the safety range of the second monitored flight vehicle near the UI representing the second monitored flight vehicle; and S332, which involves displaying guidelines on the first control screen for avoiding the predicted collision between the first and second monitored flight vehicles. The safety ranges of the first and second monitored flight vehicles may be as described earlier with reference to FIG. 7.

FIG. 15 illustrates some of the sub-steps depicted in FIG. 14. Specifically, FIG. 15 illustrates an exemplary first control screen with guidelines for avoiding the detected potential collision between the first and second monitored flight vehicles.

Referring to FIG. 15, the first control screen 100 may present the first operation information 10a of the first monitored flight vehicle near the UI 10 representing the first monitored flight vehicle and the second operation information 20a of the second monitored flight vehicle near the UI 20 representing the second monitored flight vehicle. The safety range 10b of the first monitored flight vehicle may also be displayed near the UI 10, and the safety range 20b of the second monitored flight vehicle may also be displayed near the UI 20.

The first operation information 10a of the first monitored flight vehicle and the first operation information 10b of the second monitored flight vehicle may include the ground speeds, headings, and AGLs of the first and second monitored flight vehicles and the distance between the first and second monitored flight vehicles.

The first control screen 100 with guidelines 11a and 11b for avoiding the predicted potential collision between the first and second monitored flight vehicles may be provided. The guidelines 11a and 11b may be generated based on the existing route information and the operation information of the first and second monitored flight vehicles. Upon receiving the input of a selection for the guidelines 11a and 11b from the user, the potential collision between the first and second monitored flight vehicles may be avoided by controlling at least one of the first and second monitored flight vehicles. If no user input is received for a predefined duration, one of the guidelines 11a and 11b may be automatically selected to prevent the potential collision between the first and second monitored flight vehicles.

FIG. 15 illustrates an exemplary first control screen 100 with the guidelines 11a and 11b for controlling the first monitored flight vehicle, which is positioned relatively behind the second monitored flight vehicle, taking into account the routes of the first and second monitored flight vehicles to prevent a potential collision between the first and second monitored flight vehicles. However, it is also possible to provide a first control screen 100 with guidelines (not illustrated) for controlling the second monitored flight vehicle to avoid the potential collision between the first and second monitored flight vehicles.

Although the guidelines 11a and 11b for avoiding a collision between the first and second monitored flight vehicles are presented in a two-dimensional (2D) plane, indicating potential control of either the first or second monitored flight vehicle in horizontal and vertical directions to evade the collision, it is also feasible to provide a first control screen 100 with guidelines for controlling at least one of the speed, altitude, and heading of the first and second monitored flight vehicles in a three-dimensional (3D) space for collision avoidance.

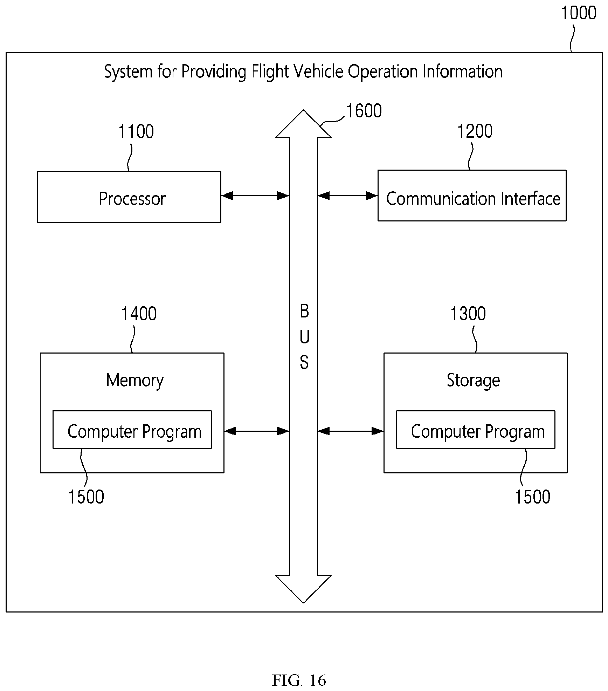

FIG. 16 is a hardware configuration view of a system for providing flight vehicle operation information in accordance with some embodiments of the present disclosure. Referring to FIG. 16, a system 1000 for providing flight vehicle operation information may include at least one processor 1100, a system bus 1600, a communication interface 1200, a memory 1400, which loads a computer program 1500 to be executed by the processor 1100, and a storage 1300, which stores the computer program 1500.

The processor 1100 controls the overall operation of the system 1000. The processor 1100 may perform computations for at least one application or program to execute methods/operations according to various embodiments of the present disclosure. The memory 1400 stores various data, commands, and/or information. The memory 1400 may load the computer program 1500 from the storage 1300 to execute the methods/operations according to various embodiments of the present disclosure. The system bus 1600 provides communication capabilities among the components of the system 1000. The communication interface 1200 supports Internet communication of the system 1000. The storage 1300 may temporarily store the computer program 1500. The computer program 1500 may include one or more instructions that implement the methods/operations according to various embodiments of the present disclosure. When the computer program 1500 is loaded into the memory 1400, the processor 1100 may perform the methods/operations according to various embodiments of the present disclosure by executing the one or more instructions.

In some embodiments, the system 1000 described with reference to FIG. 16 may be configured using cloud technologies, such as virtual machines, and leveraging one or more physical servers in a server farm. In this case, some of the components depicted in FIG. 16, such as the processor 1100, the memory 1400, and the storage 1300, may be implemented as virtual hardware. Similarly, the communication interface 1200 may be composed of virtualized networking elements, such as a virtual switch.

Embodiments of the present disclosure have been described above with reference to FIGS. 1 through 16, but it should be noted that the effects of the present disclosure are not limited to those described above, and other effects of the present disclosure should be apparent from the following description.

The technical features of the present disclosure described so far may be embodied as computer readable codes on a computer readable medium. The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. In concluding the detailed description, those skilled in the art will appreciate that many variations and modifications can be made to the example embodiments without substantially departing from the principles of the present disclosure. Therefore, the disclosed example embodiments of the disclosure are used in a generic and descriptive sense only and not for purposes of limitation. The protection scope of the present invention should be interpreted by the following claims, and all technical ideas within the equivalent range should be interpreted as being included in the scope of the technical ideas defined by the present disclosure.

## Claims

1. A method of providing flight vehicle operation information, the method being performed by a computing device, and comprising:
providing a first control screen, which displays first operation information of a plurality of monitored flight vehicles;
inputting the first operation information and context information to a pre-established operation information prediction model and generating second operation information of the monitored flight vehicles at a future time point based on data output from the operation information prediction model; and
providing a second control screen, which displays the second operation information.

2. The method of claim 1, wherein the providing the first control screen, comprises displaying the first operation information near user interfaces (UI) that represent the respective monitored flight vehicles, displaying a list of the monitored flight vehicles in a first area of the first control screen, displaying notification messages associated with operations of the monitored flight vehicles in a second area of the first control screen, and displaying a map of a region being controlled via the first control screen in a third area of the first control screen.

3. The method of claim 2, wherein the providing the second control screen, comprises presenting a simulated image with a playback time that corresponds to a predefined first time on the second control screen, and
the simulated image is regenerated at intervals of a predefined second time.

4. The method of claim 2, wherein the providing the second control screen, comprises predicting a potential collision between first and second monitored flight vehicles, which are among the monitored flight vehicles, based on the second operation information, displaying information on the potential collision if the potential collision is predicted, and presenting details on how to control the first and second monitored flight vehicles to avoid the predicted collision on the first control screen.

5. The method of claim 4, wherein the predicting the potential collision between the first and second monitored flight vehicles, comprises predicting that a collision between the first and second monitored flight vehicles will occur when a first safety range, set around the first monitored flight vehicle, overlaps with a second safety range, set around the second monitored flight vehicle.

6. The method of claim 4, wherein the displaying the information on the potential collision between the first and second monitored flight vehicles, comprises displaying the first and second monitored flight vehicles in the list of the monitored flight vehicles in the first area of the first control screen to be visually distinguishable from other monitored flight vehicles.

7. The method of claim 4, wherein the displaying the information on the potential collision between the first and second monitored flight vehicles, comprises displaying a warning message for the potential collision between first and second monitored flight vehicles in the second area of the first control screen.

8. The method of claim 4, wherein the displaying the information on the potential collision between the first and second monitored flight vehicles, comprises displaying location information of the potential collision between first and second monitored flight vehicles in the third area of the first control screen.

9. The method of claim 4, wherein the displaying the information on the potential collision between the first and second monitored flight vehicles, comprises displaying an image of a simulated collision between the first and second monitored flight vehicles on the first control screen.

10. The method of claim 4, wherein the presenting the details on how to control the first and second monitored flight vehicles, comprises displaying safety ranges around the first and second monitored flight vehicles and displaying guidelines for avoiding the potential collision between the first and second monitored flight vehicles.

11. The method of claim 10, wherein the details on how to control the first and second monitored flight vehicles is a method of controlling the first monitored flight vehicle to avoid the potential collision between the first and second monitored flight vehicles.

12. The method of claim 10, wherein the details on how to control the first and second monitored flight vehicles is a method of controlling the second monitored flight vehicle to avoid the potential collision between the first and second monitored flight vehicles.

13. A system for providing flight vehicle operation information, comprising:
a processor; and
a memory storing instructions;
wherein when executed by the processor, the instructions allow the processor to perform operations of: providing a first control screen, which displays first operation information of a plurality of monitored flight vehicles; inputting the first operation information and context information to a pre-established operation information prediction model and generating second operation information of the monitored flight vehicles at a future time point based on data output from the operation information prediction model; and providing a second control screen, which displays the second operation information.

14. The system of claim 13, wherein the operation of providing the second control screen comprises predicting a potential collision between first and second monitored flight vehicles, which are among the monitored flight vehicles, based on the second operation information, displaying information on the potential collision if the potential collision is predicted, and presenting details on how to control the first and second monitored flight vehicles to avoid the predicted collision on the first control screen.

15. The system of claim 14, wherein the predicting the potential collision between the first and second monitored flight vehicles, comprises predicting that a collision between the first and second monitored flight vehicles occurs when a first safety range, set around the first monitored flight vehicle, overlaps with a second safety range, set around the second monitored flight vehicle.
